# EUROPEAN PATENT SPECIFICATION

(11) **EP 4 647 459 B1**
(45) Date of publication and mention of the grant of the patent: **11.11.2026**
(21) Application number: 24771874.5
(22) Date of filing: 21.03.2024
(51) Int. Cl.: C08J 3/24, H01B 3/44, H01B 9/02

(54) **POWER CABLE**
STROMKABEL
CÂBLE D'ALIMENTATION

(43) Date of publication of application: 12.11.2025
(73) Proprietor: SUMITOMO ELECTRIC INDUSTRIES, LTD., Osaka-shi, Osaka 541-0041 (JP)
(72) Inventor: YAMASAKI, Satoshi, Osaka-shi, Osaka 541-0041 (JP)
(74) Representative: Grünecker Patent- und Rechtsanwälte PartG mbB
(86) International application number: PCT/JP2024/011021
(87) International publication number: WO 2025/197017

(56) References cited:
- WO-A1-2016/187755
- WO-A1-2020/202689
- JP-A- 2001 014 946
- US-A1- 2023 290 535
- ANDERSSON L H U ET AL: "Crosslinking of bimodal polyethylene", POLYMER, ELSEVIER, AMSTERDAM, NL, vol. 45, no. 8, 1 April 2004 (2004-04-01), pages 2577 - 2585, XP004497170, ISSN: 0032-3861, DOI: 10.1016/J.POLYMER.2004.01.073

## Description

### [Technical Field]

The present disclosure relates to a power cable.

### [Background Art]

Crosslinked polyethylene, because of the excellent insulation properties thereof, has been widely used as a resin component for forming insulation layers in power cables (for example, see Patent Literature 1).

### [Citation List]

### [Patent Literature]

PTL. 1: Japanese Unexamined Patent Application Publication No. S57-69611
PTL. 2: US Patent Application; Publication No. US 2023/290535 A1. PTL 2 discloses an insulated electric wire comprising: a conductor formed of a plurality of element wires twisted together; and an insulating layer covering an outer periphery of the conductor, wherein the insulating layer is formed of a crosslinked product of a polymer composition. The polymer composition contains, as a main component, an ethylene-based copolymer, polyethylene, or a combination of an ethylene-based copolymer and polyethylene; the crosslinked product has a gel fraction of 60% or more, and the crosslinked product has a tensile elongation of 150% or more.
PTL. 3: International Patent Application; Publication No. WO 2016/187755 A1. PTL 3 discloses a process for preparing a cable core having a crosslinked insulation layer, said process comprising:
   (a) providing an initial cable core comprising: (i) a conductor; (ii) a fist polymeric semiconductive layer; (iii) an initial insulation layer comprising a crosslinkable polymeric composition which comprises an ethylene-based polymer, an organic peroxide, and a polyallyl crosslinking coagent ; (iv) a second polymeric semiconductive layer ; and
   (b) subjecting said initial cable core to a crosslinking process sufficient to crosslink at least a portion of said crosslinkable polymeric composition to thereby produce said cable core having a crosslinked insulation layer, wherein said polyallyl crosslinking coagent and said organic peroxide are present in said crosslinkable polymeric composition in amounts sufficient to provide an allyl-to-active oxygen molar ratio of less than 1.2, based on the allyl content of said polyallyl crosslinking coagent and the active oxygen content of said organic peroxide, and wherein when said crosslinked insulation layer is subjected to a degassing process at 70 °C and standard pressure, said crosslinked insulation layer exhibits a reduction in degassing time of at least 50 % to reach a methane content of 200 ppm relative to a reference crosslinked insulation layer having the same composition except that the reference crosslinked insulation layer contains no polyallyl crosslinking coagent and twice the amount of organic peroxide on a weight basis.
PTL. 4: Japanese Patent Application; Publication No. JP 2001/014946 A. PTL 4 discloses an electric wire/cable, characterized in that an electric insulating resin composition mainly composed of a polymer component having a melt tension of 3 g or more is coated directly on the conductor or on the conductor shielding layer.
PTL. 5: International Patent Application; Publication No. WO 2020/202689 A1. PTL 5 discloses a base resin for an electrically insulating composition containing 65 parts by mass or more and 98 parts by mass or less of polyethylene and 2 parts by mass or more and 35 parts by mass or less of a styrene-containing resin in total, and 0.05 parts by mass or more and 1.0 mass by mass of fatty acid amide.
Scientific Publication: ANDERSSON L H U ET AL: "Crosslinking of bimodal polyethylene", POLYMER, ELSEVIER, AMSTERDAM, NL, vol. 45, no. 8, 1 April 2004 (2004-04-01), pages 2577-2585, XP004497170, ISSN: 0032-3861, DOI: 10.1016/J.POLYMER.2004.01.073. This paper refers to two bimodal polyethylenes, differing only in polymerisation order, and it aims at investigating any potential influence of the polymerisation order on the crosslinking as well as to study the network formation in the crosslinked polymers.

### [Summary of Invention]

According to an aspect of the present disclosure, a power cable as set forth in claim 1 is provided.

### [Brief Description of Drawings]

[FIG. 1] FIG. 1 is a schematic cross-sectional view of a power cable according to an embodiment of the present disclosure, which is taken along a plane perpendicular to an axial direction of the power cable.
[FIG. 2] FIG. 2 is a schematic view showing a partial structure of a polyethylene as an example.
[FIG. 3] FIG. 3 is a flow chart showing a method for manufacturing a power cable according to an embodiment of the present disclosure.
[FIG. 4] FIG. 4 is a cross-sectional view showing a crosslinking device according to an embodiment of the present disclosure.

### [Description of Embodiments]

### [Problem to be Solved by the Disclosure]

An object of the present disclosure is to improve heat aging resistance of an insulation layer.

### [Advantageous Effect of the Disclosure]

According to the present disclosure, heat aging resistance of an insulation layer can be improved.

### [Description of the Embodiment of the Disclosure]

### <Findings by the Inventors>

An overview of the findings by the inventors is first described.

An insulation layer of a common power cable contained not only entirely crosslinked polyethylenes, but also a certain amount of non-crosslinked polyethylene. The proportion of the crosslinked polyethylene in the insulation layer was measured as a "gel fraction" which is a ratio of the mass of a component insoluble in xylene in the insulation layer to the total mass of the polyethylene.

Even when an insulation layer had a low gel fraction, namely, a high content of a non-crosslinked polyethylene, initial mechanical properties and electric properties were not significantly affected. Because of this, non-crosslinked polyethylene in insulation layers conventionally attracted little attention.

However, as a result of investigations by the inventors, it was found that a non-crosslinked polyethylene in an insulation layer affects heat aging resistance of the insulation layer.

Molecular chains of non-crosslinked polyethylene are more mobile than molecular chains of cross-linked polyethylene. Because of this, non-crosslinked polyethylene tend to undergo micro-Brownian motion or macro-Brownian motion by heat to be more liable to undergo heat deterioration than crosslinked polyethylene. At the time of the heat deterioration, hydrogens are abstracted from the molecular chains of the non-crosslinked polyethylene to produce radicals. The radicals of the non-crosslinked polyethylene produced by the heat deterioration bind to oxygens to form deterioration points. Accordingly, the non-crosslinked polyethylene may be a target of deterioration.

Meanwhile, heat-deteriorated non-crosslinked polyethylene may serve as an attack factor that further deteriorates crosslinked polyethylene. In other words, when radicals are produced in non-crosslinked polyethylene which have been exposed to heat over a long period of time, the radicals may abstract hydrogens of crosslinked polyethylene to cleave main chains of the crosslinked polyethylene. Accordingly, heat-deteriorated portions of non-crosslinked polyethylene may promote deterioration by spreading deterioration into crosslinked polyethylene.

As a result of the above, the presence of a non-crosslinked polyethylene in an insulation layer may affect heat aging of the insulation layer.

The inventors performed, in order to investigate the effects of non-crosslinked polyethylene on heat aging of insulation layers, a heat aging test (heating at 180°C for 21 days) in which heating was carried out at a higher temperature for a longer period of time than the conventional heat aging test. As a result, it was found that the elongation and volume resistivity of insulation layers after the heat aging test of heating at 180°C for 21 days depend on the content of methine groups (-CH groups) in non-crosslinked polyethylene in the insulation layers.

The inventors have further investigated a crosslinking step as a novel manufacturing method in order to adjust the content of methine groups in a residual non-crosslinked polyethylene in an insulation layer. As a result of further exhaustive investigations, the inventors successfully achieved an insulation layer having improved heat aging resistance by applying the novel manufacturing method to optimize the content of methine groups in a non-crosslinked polyethylene in the insulation layer.

The present disclosure is based on the above findings by the inventors.

### <Embodiments of Disclosure>

Next, embodiments of the present disclosure are described.

A power cable according to an aspect of the present disclosure and as defined in claim 1 includes
a conductor, and
an insulation layer covering an outer circumference of the conductor and constituted from a resin composition containing a polyethylene, wherein
the insulation layer contains, in the polyethylene, a crosslinked polyethylene that is insoluble in xylene at 120°C and a non-crosslinked polyethylene that is soluble in xylene at 120°C, and
the non-crosslinked polyethylene has a content of methine groups of 0.5 or more and 3.0 or less per 100 carbon atoms in the non-crosslinked polyethylene, where the content of methine groups is measured by ¹³C nuclear magnetic resonance.

According to this configuration, it is possible to improve heat aging resistance of the insulation layer.

According to some embodiments of the present invention,
the insulation layer has a gel fraction of 60% or more and 90% or less.

According to this configuration, the insulation layer has a gel fraction of 60% or more, and thus excessive production of heat-deteriorated non-crosslinked polyethylene can be prevented. Meanwhile, the insulation layer has a gel fraction of 90% or less, and thus a sufficient amount of non-crosslinked polyethylene serving as a target for deterioration can be secured.

According to some embodiments of the present invention, the non-crosslinked polyethylene has a content of methylene groups of 94 or more and 98 or less per 100 carbon atoms in the non-crosslinked polyethylene.

According to this configuration, it is possible to improve heat aging resistance of the insulation layer.

According to some embodiments of the present invention, the insulation layer contains an antioxidant having a molecular weight of 300 or more and 1100 or less.

According to this configuration, deterioration due to oxidation of the non-crosslinked polyethylene can be stably prevented.

According to some embodiments of the present invention, a sheet collected from the insulation layer has a tensile elongation at break of 50% or more as measured according to JIS C3005:2014 at 25°C after the sheet is heated at 180°C for 21 days.

According to this configuration, flexibility required of the power cable can be maintained over a long period of time.

According to some embodiments of the present invention, a sheet collected from the insulation layer has a volume resistivity of 1×10¹²Q cm or more as measured under conditions of a temperature of 90°C and a direct electric field of 10 kV/mm after the sheet is heated at 180°C for 21 days.

According to this configuration, insulation properties of the insulation layer required of the power cable can be maintained over a long period of time.

### [Details of the Embodiment of the Disclosure]

Next, an embodiment of the present disclosure is described below with reference to the drawings.

### <One Embodiment of the Disclosure>

### (1) Resin composition

A resin composition according to the present embodiment is a material that forms an insulation layer 130 of a power cable 10, which will be described later, and is a material before beingt crosslinked. The resin composition contains, for example, a base resin, a crosslinking agent, an antioxidant and an additional additive.

### (Base resin)

The base resin (base polymer) refers to a resin component that forms a main component of the resin composition. The base resin according to the present embodiment includes, for example, a polyethylene.

Examples of the polyethylene that forms the base resin include low-density polyethylene (LDPE: density: 0.91 g/cm³ or more and less than 0.93 g/cm³), linear low-density polyethylene (LLDPE: density: 0.92 g/cm³ or more and 0.945 g/cm³ or less), medium-density polyethylene (MDPE: density: 0.93 g/cm³ or more and less than 0.942 g/cm³) and high-density polyethylene (HDPE: density: 0.942 g/cm³ or more and 0.97 g/cm³ or less). Two or more polyethylenes from the above may be used in combination.

In the present embodiment, the base resin may be, inter alia, at least either LDPE or LLDPE. Because of this, the insulation layer 130 of the power cable 10 can have improved mechanical properties while having improved insulation properties.

The polyethylene may have any melting point without limitation. Nevertheless, the polyethylene may have a melting point of, for example, 90°C or higher and 135°C or lower.

In the crosslinking step S400 described hereinafter, according to how the above-mentioned polyethylene is crosslinked, the gel fraction of the insulation layer 130 after crosslinking, the content of methine groups in the residual non-crosslinked polyethylene in the insulation layer 130 after crosslinking, etc. vary.

The base resin may contain, in addition to the polyethylene as a main component, at least either a copolymer of an olefin and a polar monomer or an α-olefin copolymer. Examples of the copolymer of an olefin and a polar monomer include ethylene-ethyl acrylate copolymers and ethylene-methyl acrylate copolymers. Examples of the α-olefin copolymer include very low-density polyethylene (VLDPE) and ethylene propylene rubbers. Two or more of the above copolymers may be included in the base resin in combination.

The content of at least either the copolymer of an olefin and a polar monomer or the α-olefin copolymer in the base resin is, for example, 0 parts by mass or more and 20 parts by mass or less relative to 100 parts by mass of the base resin.

### (Crosslinking agent)

The crosslinking agent is, for example, an organic peroxide. Examples of the organic peroxide include dicumyl peroxide, 2,5-dimethyl-2,5-di(t-butylperoxy)hexane and 1,3-bis(t-butylperoxyisopropyl)benzene. Two or more of the above-mentioned organic peroxides may be used in combination.

Any amount of the crosslinking agent may be included in the resin composition without limitation. The content is, for example, 0.1 parts by mass or more and 4.0 parts by mass or less relative to 100 parts by mass of the base resin. Meanwhile, when the content of the crosslinking agent is 4.0 parts by mass or less, fouling of an extruder in the manufacturing process of the power cable 10 can be prevented by preventing residual heat deterioration components of the base resin in the extruder.

### (Antioxidant)

The antioxidant is constituted so as to, for example, prevent oxidation of the polyethylene in the extrusion step S300 and crosslinking step S400 and prevent heat aging of the polyethylene after the manufacture of the power cable 100. The antioxidant suitable for the present embodiment is described in detail hereinafter.

### (Additional additive)

The resin composition may further include, for example, a copper inhibitor, a lubricant and a colorant as additional additives.

### (2) Power cable

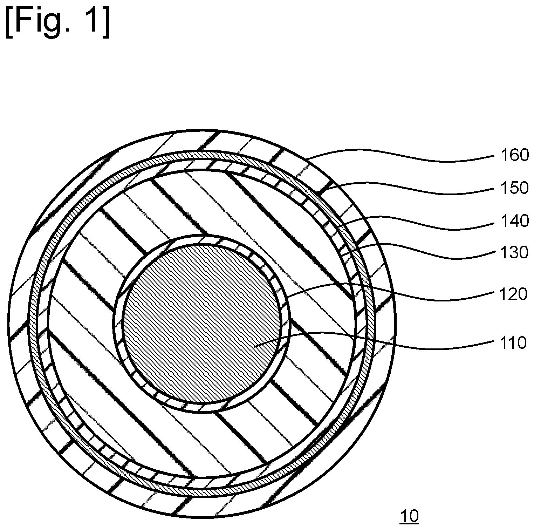

The power cable according to the present embodiment is hereinafter described by referring to FIG. 1.

The power cable 10 according to the present embodiment is formed as a so-called solid insulation power cable. The power cable 10 may be used for alternate current or direct current.

Specifically, the power cable 10 has, for example, a conductor 110, an inner semiconductive layer 120, an insulation layer 130, an outer semiconductive layer 140, a shielding layer 150 and a sheath 160.

### (Conductor (conducting part))

The conductor 110 is formed from, for example, multiple twisted conductor cores (conductive cores) containing pure copper, a copper alloy, aluminum or an aluminum alloy.

### (Inner semiconductive layer)

The inner semiconductive layer 120 is provided to cover the outer circumference of the conductor 110. The inner semiconductive layer 120 has semiconductivity and is configured to suppress electric field concentration on the surface of the conductor 110. The inner semiconductive layer 120 contains, for example, at least any of an ethylene-ethyl acrylate copolymer, an ethylene-methyl acrylate copolymer, an ethylene-butyl acrylate copolymer, an ethylene-vinyl acetate copolymer, and the like, and conductive carbon black.

### (Insulation layer)

The insulation layer 130 is provided to cover the outer circumference of the inner semiconductive layer 120. The insulation layer 130 is formed by, for example, extruding the above-mentioned resin composition.

In the present embodiment, the insulation layer 130 contains, due to the crosslinking step S400 as a novel manufacturing method described hereinafter, some polyethylene which has been crosslinked and other polyethylene which remains non-crosslinked. Further, in the present embodiment, due to the crosslinking step S400 as a novel manufacturing method described hereinafter, the content of methine groups in the non-crosslinked polyethylene in the insulation layer 130 is optimized. The details of these features are described hereinafter.

### (Outer semiconductive layer)

The outer semiconductive layer 140 is provided so as to cover the outer circumference of the insulation layer 130. The outer semiconductive layer 140 has semiconductivity and is configured to suppress electric field concentration between the insulating layer 130 and the shielding layer 150. The outer semiconductive layer 140 is formed from, for example, the same material as the inner semiconductive layer 120.

### (Shielding layer)

The shielding layer 150 is provided to cover the outer circumference of the outer semiconductive layer 140. The shielding layer 150 is configured by, for example, winding a copper tape or as a wire shield that contains multiple annealed copper wires wound. A tape made of a rubber-coated fabric or the like may be wound around the inside or outside of the shielding layer 150.

### (Sheath)

The sheath 160 is provided to cover the outer circumference of the shielding layer 150. The sheath 160 is formed from, for example, poly(vinyl chloride) or polyethylene.

### (3) Characteristics of the insulation layer according to the present embodiment

Next, characteristics of the insulation layer 130 according to the present embodiment are described.

### (Functional groups of non-crosslinked polyethylene)

In the present embodiment, the insulation layer 130 contains, in the polyethylene, for example a crosslinked polyethylene that is insoluble in xylene at 120°C and a non-crosslinked polyethylene that is soluble in xylene at 120°C due to the crosslinking step S400 as a novel manufacturing method described hereinafter.

As a result of the exhaustive investigations, the inventors found optimal ranges of the contents of respective functional groups in the non-crosslinked polyethylene capable of preventing heat aging of the insulation layer 130.

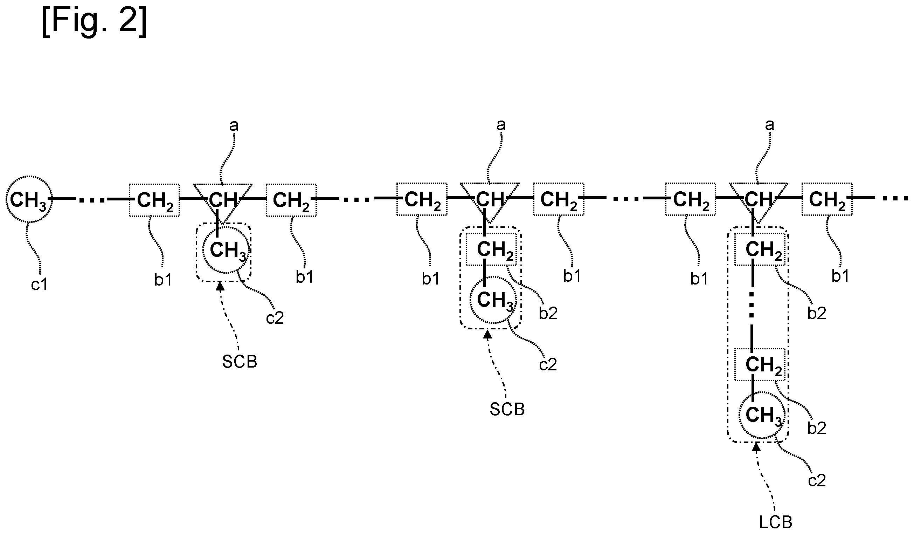

By referring to FIG. 2, functional groups (hydrocarbon groups) in the non-crosslinked polyethylene in the insulation layer 130 according to the present embodiment are described.

As illustrated in FIG. 2, the polyethylene used as a raw material of the base resin forming the insulation layer 130 or the non-crosslinked polyethylene which remains in the insulation layer 130 after crosslinking has, for example, methine groups, methylene groups and methyl groups.

The "methine group" is a functional group represented by -CH. The methine group has one carbon atom and one hydrogen atom linked to the carbon atom. The carbon atom of the methine group is also linked to at least one more carbon atom in addition to the hydrogen atom.

Specifically, as illustrated in, for example, FIG. 2, the methine group a forms a part of the main chain of polyethylene. The carbon atom of the methine group a is linked to a branch. Examples of the branch include the following.
· Short chain branches (SCBs) such as methyl branches
· Long chain branches (LCBs)

The carbon of a methine group a linked to a branch is a tertiary carbon.

The methine group a has a lower binding energy than methylene and methyl groups. Because of this, a hydrogen atom of a methine group a tends to be eliminated in a crosslinking step by a crosslinking agent to produce a radical. Meanwhile, when the power cable 10 is exposed to high temperature for a long period of time, the methine group a is liable to be decomposed, namely tends to provide an origin of heat deterioration.

A polyethylene (such as the residual non-crosslinked polyethylene) contains a large amount of methine groups a linked to branches as described above. However, there may be a methine group forming a part of a vinyl group or the like without binding to any branches.

The "methylene group" is a functional group represented by -CH₂. The methylene group has one carbon atom and two hydrogen atoms linked to the carbon atom.

Specifically, as illustrated in, for example, FIG. 2, the methylene group b1 configures a part of the main chain of polyethylene. The carbon atom of the methylene group b1 is not linked to a carbon atom of a branch. The methylene group b2 per se, however, may configure a part of a branch having two or more carbons.

The "methyl group" is a functional group represented by -CH₃. The methyl group has one carbon atom and three hydrogen atoms linked to the carbon atom.

Specifically, as illustrated in, for example, FIG. 2, the methyl group c1 is at an end of the main chain of polyethylene or the methyl group c2 is at an end of a branch.

Methine, methylene and methyl groups described above in polyethylene can be analyzed by, for example, ¹³C nuclear magnetic resonance (NMR; hereinafter abbreviated as ¹³C-NMR). In a ¹³C-NMR spectrum of a polyethylene, multiple peaks derived from methine, methylene and methyl groups are detected according to the positions thereof in the polyethylene. The contents of the functional groups are determined on the basis of the peak integral intensity of the functional groups.

The polyethylene used as a raw material of the base resin forming the insulation layer 130 has a content of methine groups of, for example, 0.1 or more and 5.0 or less per 100 carbon atoms in the polyethylene. The polyethylene as a raw material has a content of methylene groups of, for example, 92 or more and 99 or less per 100 carbon atoms in the polyethylene.

In contrast, the contents of the functional groups in the non-crosslinked polyethylene which remains in the insulation layer 130 after crosslinking depend on conditions of the crosslinking step. On the basis of conditions of the crosslinking steps, Comparative Examples 1 and 2 and the present embodiment are hereinafter compared.

Comparative Example 1 is the case where a conventional crosslinking step was carried out and a polyethylene in an insulation layer was crosslinked at an appropriate temperature. In Comparative Example 1, radicals are produced by means of a crosslinking agent at the positions of methine groups and the like in the polyethylene and other molecular chains of polyethylene bind at the positions where the radicals are produced. Because of this, the polyethylene forming the insulation layer in Comparative Example 1 is sufficiently crosslinked, and thus the amount of residual non-crosslinked polyethylene is extremely low. In Comparative Example 1, a large amount of methine groups in the polyethylene is decomposed during the crosslinking step, decreasing the content of methine groups in the residual non-crosslinked polyethylene. As a result, the non-crosslinked polyethylene of Comparative Example 1 has a content of methine groups of, for example, less than 0.5 per 100 carbon atoms in the non-crosslinked polyethylene.

When, as in Comparative Example 1, the non-crosslinked polyethylene has a content of methine groups of less than 0.5, the non-crosslinked polyethylene has an extremely small amount of methine groups that may serve as origins of heat deterioration. Because of this, crosslinked polyethylene rather than the non-crosslinked polyethylene may be directly targeted for deterioration. As a result, the insulation layer is liable to undergo heat aging.

Comparative Example 2 is the case where the crosslinking temperature is extremely low or extremely high. When the crosslinking temperature is extremely low, radicals are hardly produced, and thus the polyethylene forming the insulation layer is not sufficiently crosslinked. Meanwhile, when the crosslinking temperature is extremely high, the crosslinking agent may be volatilized during the crosslinking step or only the outermost surface of the insulation layer may be excessively crosslinked, and thus the polyethylene is not sufficiently crosslinked throughout the insulation layer. Because of this, in Comparative Example 2, most of the raw material polyethylene is not consumed for crosslinking and the amount of residual non-crosslinked polyethylene becomes high. In Comparative Example 2, methine groups in the polyethylene are hardly decomposed during the crosslinking step, increasing the content of methine groups in the residual non-crosslinked polyethylene. As a result, the non-crosslinked polyethylene of Comparative Example 2 has a content of methine groups of, for example, above 3.0 per 100 carbon atoms in the non-crosslinked polyethylene.

When, as in Comparative Example 2, the non-crosslinked polyethylene has a content of methine groups of above 3.0, the amount of residual methine groups that may serve as origins of heat deterioration is extremely large in the non-crosslinked polyethylene. Because of this, the non-crosslinked polyethylene is liable to undergo heat deterioration originating from the extreme amount of residual methine groups. The non-crosslinked polyethylene excessively heat deteriorated may further attack crosslinked polyethylene. As a result, heat aging may progress throughout the insulation layer.

In contrast, in the present embodiment, a sufficient amount of crosslinked polyethylene is formed in the insulation layer 130 while leaving an appropriate amount of residual non-crosslinked polyethylene in said layer due to the crosslinking step S400 as a novel manufacturing method described hereinafter. In the present embodiment, an appropriate amount of methine groups that are decomposed in the polyethylene contributes to crosslinking during the crosslinking step and the non-crosslinked polyethylene has an appropriate amount of residual methine groups.

Specifically, in the present embodiment, the non-crosslinked polyethylene which remains in the insulation layer 130 has a content of methine groups of, for example, 0.5 or more and 3.0 or less per 100 carbon atoms in the non-crosslinked polyethylene.

In the present embodiment, the non-crosslinked polyethylene has a content of methine groups of 0.5 or more per 100 C, and thus excessive formation of the crosslinked polyethylene can be prevented while allowing a certain amount of residual methine groups that may serve as origins of heat deterioration to remain in the residual non-crosslinked polyethylene in the insulation layer 130. Because of this, the methine groups in the non-crosslinked polyethylene can be targeted for deterioration and deterioration attacks on the crosslinked polyethylene may be prevented. As a result, heat aging of the insulation layer can be prevented.

Meanwhile, in the present embodiment, the non-crosslinked polyethylene has a content of methine groups of 3.0 or less per 100 C, and thus a sufficient amount of the crosslinked polyethylene can be formed and excessive residual methine groups that may serve as origins of heat deterioration can be prevented in the non-crosslinked polyethylene. Because of this, further attacks on the crosslinked polyethylene resulting from heat-deteriorated non-crosslinked polyethylene can be prevented. As a result, heat aging throughout the insulation layer 130 can be prevented from progressing.

In the present embodiment, the non-crosslinked polyethylene which remains in the insulation layer 130 may have a content of methylene groups of, for example, 94 or more and 98 or less per 100 carbon atoms in the non-crosslinked polyethylene. The non-crosslinked polyethylene has a content of methylene groups of 94 or more per 100 C, and thus excessive residual methine groups that may serve as origins of heat deterioration can be prevented in the non-crosslinked polyethylene. Because of this, excessive heat deterioration of the non-crosslinked polyethylene originating from methine groups can be prevented. As a result, further attacks on the crosslinked polyethylene resulting from heat-deteriorated non-crosslinked polyethylene can be prevented. Meanwhile, the non-crosslinked polyethylene has a content of methylene groups of 98 or less per 100 C, and thus the non-crosslinked polyethylene can have a certain amount of residual methine groups that may serve as origins of heat deterioration. Because of this, the methine groups in the non-crosslinked polyethylene can be targeted for deterioration and deterioration attacks on the crosslinked polyethylene can be prevented.

### (Gel fraction)

In the present embodiment, due to the crosslinking step S400 as a novel manufacturing method described hereinafter, the gel fraction (degree of crosslinking) of the insulation layer 130 is appropriately adjusted.

Specifically, in the present embodiment, the insulation layer 130 may have a gel fraction of, for example, 60% or more and 90% or less. The insulation layer 130 has a gel fraction of 60% or more, and thus excessive formation of heat-deteriorated non-crosslinked polyethylene can be prevented. As a result, further attacks on the crosslinked polyethylene resulting from the heat-deteriorated non-crosslinked polyethylene can be stably prevented. Meanwhile, the insulation layer 130 has a gel fraction of 90% or less, and thus a sufficient amount of non-crosslinked polyethylene serving as a target for deterioration can be secured. As a result, deterioration attacks on the crosslinked polyethylene can be stably prevented.

### (Crosslinking state)

In the present embodiment, the polyethylene that forms the insulation layer 130 is crosslinked with an organic peroxide. Crosslinking with an organic peroxide may be referred to as chemical crosslinking or heat crosslinking.

In other words, the insulation layer 130 according to the present embodiment is not crosslinked by so-called silane crosslinking. The "silane crosslinking" as used herein is carried out according to the following procedures. First, in the presence of an organic peroxide, a hydrolysable silane coupling agent is grafted to a polyethylene to obtain a silane-grafted polyethylene. The silane-grafted polyethylene is then brought into contact with water in the presence of a silanol condensation catalyst to crosslink the polyethylene. As a result, in the silane crosslinking, a silicon atom (and oxygen atom) is included at crosslinking points of the polyethylene. In such silane crosslinking, it is difficult to increase the gel fraction. Further, when the insulation layer 130 is thick, water hardly permeates in the insulation layer 130 and thus it is difficult to uniformly crosslink throughout the insulation layer 130.

In contrast, in the present embodiment, the polyethylene forming the insulation layer 130 is heat-crosslinked using the organic peroxide as described above, and thus the crosslinked polyethylene in the insulation layer 130 does not contain a silicon atom (or oxygen atom) at crosslinking points. Because of this, rigid binding in the crosslinked polyethylene in the insulation layer 130 can be maintained. The gel fraction of the insulation layer 130 can be stably kept in the above range. Further, even when the insulation layer 130 is thick, uniform crosslinking can be achieved throughout the insulation layer 130 while keeping a prescribed amount of the residual non-crosslinked polyethylene.

### (4) Antioxidant

Any antioxidant can be used without limitation in the present embodiment. However, in the present embodiment, the antioxidant may have, for example, the following feature on the basis of the relationship between the residual non-crosslinked polyethylene in the insulation layer 130 and the antioxidant, etc.

In the present embodiment, the insulation layer 130 may contain an antioxidant having a molecular weight of, for example, 300 or more and 1100 or less.

In heat deterioration, hydrogen is abstracted from molecular chains of a polymer to generate radicals. Hydrogen is easily abstracted from a molecular chain in the order of methine, methylene and methyl groups. The radicals of the molecular chains produced by heat deterioration bind to oxygen to form deterioration points. Before the radicals bind to oxygen, the antioxidant deactivates the radicals. As a result, oxidation of the polymer can be prevented.

However, when the antioxidant has an extremely low molecular weight, radicals generated in the crosslinking agent or radicals in main chains of a polymer produced by abstracting hydrogen in the main chains of the polymer due to radicals of the crosslinking agent may be deactivated. Because of this, a desired degree of crosslinking (gel fraction) may not be achieved. Meanwhile, when the antioxidant has an extremely high molecular weight, although the detailed mechanisms are unknown, methine groups in the polymer cause the state close to steric hinderance and for the antioxidant having a high molecular weight, it is not easy to approach the polymer having methine groups. Because of this, it is believed that the antioxidant can hardly work on the polymer. For the above reasons, the antioxidant has an optimal range of molecular weight according to the polymer on which the antioxidant functions.

In the present embodiment, the antioxidant has a molecular weight of 300 or more, and thus can prevent deactivation of radicals produced in the crosslinking agent or radicals in the main chains of the polyethylene produced due to the radicals produced in the crosslinking agent. As a result, a desired degree of crosslinking (gel fraction) can be stably achieved. Meanwhile, when the antioxidant has a molecular weight of 1100 or less, although the detailed mechanisms are unknown, the antioxidant can approach the non-crosslinked polyethylene despite the methine groups of the non-crosslinked polyethylene. Because of this, the antioxidant can suitably work on the non-crosslinked polyethylene satisfying the content of methine groups described above. As a result, deterioration due to oxidation of the non-crosslinked polyethylene can be stably prevented.

In the present embodiment, the antioxidant may be, for example, based on phenol.

The antioxidant may be, for example, based on hindered phenol having a bulky substituent at least in a part thereof. Examples of the bulky substituent include a tert-butyl group. When the antioxidant is not based on hindered phenol, namely does not have a bulky substituent, radicals produced in the crosslinking agent or radicals in the main chains of the polyethylene produced due to the radicals produced in the crosslinking agent may be deactivated. Meanwhile, the antioxidant having a bulky substituent can prevent excessive motion of the antioxidant per se. As a result, deactivation of radicals produced in the crosslinking agent or radicals in the main chains of the polyethylene produced due to the radicals produced in the crosslinking agent can be prevented.

The phenolic antioxidant may have, for example, a bulky substituent at both ortho positions relative to the hydroxy group of the phenolic skeleton as in a so-called "bis-hindered" type.

Alternatively, the phenolic antioxidant may have, for example, a bulky substituent at only one ortho position relative to the hydroxy group of the phenolic skeleton as in a so-called "mono-hindered" type. Specifically, the antioxidant may have, for example, at one ortho position relative to the hydroxy group of the phenolic skeleton, a hydrogen or an alkyl group with 1 to 3 carbon atoms. In other words, the antioxidant may not have a bulky substituent at, at least one ortho position relative to the hydroxy group thereof. Because of this, there may be less steric hinderance around the hydroxy group of the antioxidant. Because of less steric hinderance, the molecule of the antioxidant can be more mobile. As a result, the antioxidant can function not only on the non-crosslinked polyethylene but also on the crosslinked polyethylene that is complexly crosslinked.

Alternatively, in the present embodiment, the antioxidant may be, for example, based on amine.

In the present embodiment, the antioxidant may have a melting point of, for example, 200°C or lower. Because of this, in the resin composition preparation step S100 in which the polyethylene as the base resin is mixed with the antioxidant and in the crosslinking step S400, for example, the antioxidant can be melted into the base resin. As a result, the antioxidant can be uniformly dispersed in the base resin.

The melting point of the antioxidant may have any lower limit without limitation. The antioxidant has a melting point of, for example, 0°C or higher.

Examples of the antioxidant used in the present embodiment include the following compounds.
· 1,3,5-Tris[[4-(1,1-dimethylethyl)-3-hydroxy-2,6-dimethylphenyl]methyl]-1,3,5-triazine-2,4,6(1H,3H,5H)-trione (molecular weight: 699, melting point: 160°C)
· 4,4'-Thiobis(6-tert-butyl-m-cresol) (molecular weight: 359, melting point: 160°C)
· Bis[4-(1-phenyl-1-methylethyl)phenyl]amine (molecular weight: 406, melting point: 100°C)
· 1,2,3,4-Butanetetracarboxylic acid, tetrakis(1,2,2,6,6-pentamethylpiperizin-4-yl) (molecular weight: 847, melting point: 65°C)
· 1,2,3,4-Butanetetracarboxylic acid, tetrakis(2,2,6,6-tetramethyl-4-piperidinyl) (molecular weight: 791, melting point: 125-135°C)

The content of the antioxidant in the resin composition is, for example, 0.02 parts by mass or more and 5 parts by mass or less relative to 100 parts by mass of the base resin. When the content of the antioxidant is 0.02 parts by mass or more, heat aging resistance of the insulation layer 130 can be stably achieved. Meanwhile, when the content of the antioxidant is 5 parts by mass or less, a desired degree of crosslinking (gel fraction) can be stably achieved without inhibiting crosslinking.

### (5) Cable characteristics

In the present embodiment, the insulation layer 130 satisfies the above-mentioned requirements, and thus the following characteristics of the insulation layer 130 can be achieved.

In the present embodiment, the insulation layer 130 exhibits preferable heat aging resistance even in a heat aging test in which the temperature and duration of heating are greater than those in the conventional heat aging test.

Specifically, in the present embodiment, a sheet collected from the insulation layer 130 has a tensile elongation at break of, for example, 50% or more as measured according to JIS C3005:2014 at 25°C after a heat aging test of heating the sheet at 180°C for 21 days.

The heat aging test in which a sheet collected from the insulation layer 130 is heated at 180°C for 21 days corresponds to a few decades under normal operation temperature according to the half-life rule at 8°C.

In the measurement of the tensile elongation at break according to JIS C3005:2014, the tensile elongation at break ε is, for example, measured under test conditions of a tensile rate of 200 mm/min and distance between gauge lines of 25 mm and determined by formula (1) below, $ε = \left\{\left(L1-L0\right)/L0\right\} \times 100$ (1) where L1 is the length (mm) between gauge lines at break and L0 is a distance (mm) between gauge lines.

In the present embodiment, the insulation layer 130 satisfies the above-mentioned tensile elongation at break after the heat aging test under harsh conditions, and thus heat aging in elongation of the insulation layer 130 can be prevented even in the power cable 10 which generated heat due to passage of current over a long period of time. As a result, flexibility required of the power cable 10 can be maintained over a long period of time.

In the present embodiment, a sheet collected from the insulation layer 130 has a volume resistivity of 1×10¹² Ω·cm or more as measured under conditions of a temperature of 90°C and a direct electric field of 10 kV/mm after a heat aging test of heating the sheet at 180°C for 21 days.

In the present embodiment, the insulation layer 130 satisfies the above-mentioned volume resistivity after the heat aging test under harsh conditions, and thus heat aging in insulation properties of the insulation layer 130 can be prevented even in the power cable 10 which generated heat due to passage of current over a long period of time. As a result, insulation properties of the insulation layer 130 required of the power cable 10 can be maintained over a long period of time.

In the present embodiment, the insulation layer 130 naturally exhibits preferable heat aging resistance when subjected to the conventional heat aging test.

Specifically, in the present embodiment, a sheet collected from the insulation layer 130 may have a tensile elongation at break of, for example, 300% or more or above 500% as measured according to JIS C3005:2014 at 25°C after a heat aging test of heating the sheet at 120°C for 7 days.

### (6) Method for manufacturing power cable

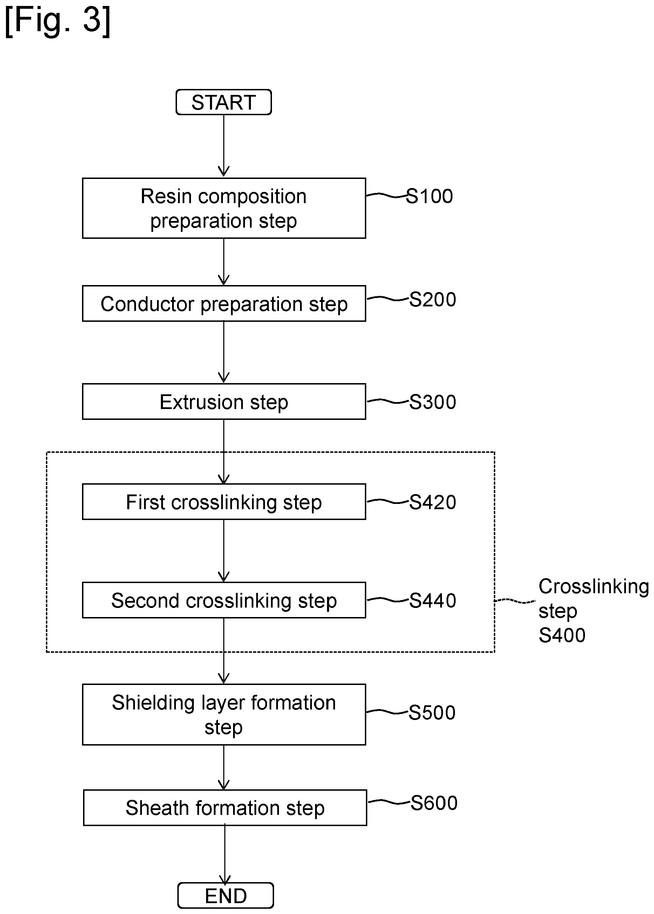

A method for manufacturing the power cable according to the present embodiment is hereinafter described by referring to FIG. 3.

As illustrated in FIG. 3, the method for manufacturing the power cable according to the present embodiment includes, for example, a resin composition preparation step S100, a conductor preparation step S200, an extrusion step S300, a crosslinking step S400, a shielding layer formation step S500 and a sheath formation step S600.

### (S100: Resin composition preparation step)

First, a resin composition forming the insulation layer 130 according to the present embodiment is prepared.

In the present embodiment, a base resin containing a polyethylene, a crosslinking agent, an antioxidant and an additional additive are mixed (kneaded) in a mixer to form a mixed material. Examples of the mixer include an open roller, a Banbury mixer, a pressure kneader, a uniaxial mixer and a multiaxial mixer. Kneading may be carried out only once or may be carried out over multiple separate cycles.

In this case, in the present embodiment, the pre-crosslinking polyethylene may have, for example, a content of methine groups of 0.1 or more and 5.0 or less and a content of methylene groups of 92 or more and 99 or less per 100 carbon atoms in the polyethylene. Because of this, the non-crosslinked polyethylene in the insulation layer 130 may stably have an appropriate amount of residual methine groups remaining therein.

In this case, in the present embodiment, the antioxidant may have a molecular weight of, for example, 300 or more and 1100 or less. The antioxidant has a molecular weight of 300 or more, and thus deactivation of radicals produced in the crosslinking agent or radicals in the main chains of the polyethylene produced due to the radicals produced in the crosslinking agent can be prevented in the crosslinking step S400 described hereinafter. Meanwhile, the antioxidant has a molecular weight of 1100 or less, and thus the antioxidant can suitably work on the non-crosslinked polyethylene satisfying the desired content of methine groups in the crosslinking step S400 described hereinafter.

When the mixed material is formed, the mixed material is granulated in the extruder. Accordingly, a resin composition in the form of pellets forming the insulation layer 130 is formed. A biaxial extruder having high kneading power may be used to collectively perform the steps from the mixing to the granulation.

### (S200: Conductor preparation step)

Meanwhile, a conductor 110 formed by twisting multiple conductor cores is prepared.

### (S300: Extrusion step)

After completion of the resin composition preparation step S100 and the conductor preparation step S200, the resin composition is used in the extrusion step S300 to form the insulation layer 130 so as to cover the outer circumference of the conductor 110.

In the present embodiment, a triple extruder, for example, is used to simultaneously form the inner semiconductive layer 120, the insulation layer 130 and the outer semiconductive layer 140.

Specifically, in the triple extruder, an extruder A that forms the inner semiconductive layer 120 is charged with, for example, an inner semiconductive layer composition.

An extruder B that forms the insulation layer 130 is charged with the above-mentioned resin composition in the form of pellets. At this time, the extruder B is set at the temperature that is higher than the melting point of the base resin by 5°C or more and 50°C or less. The set temperature is appropriately adjusted on the basis of the linear speed and the extrusion pressure.

Further, an extruder C that forms the outer semiconductive layer 140 is charged with an outer semiconductive layer composition comprising the same material as the inner semiconductive layer composition placed in the extruder A.

Next, the extrusion products from the extruders A to C are respectively guided to a common head and from the inside towards the outside, the inner semiconductive layer 120, the insulation layer 130 and the outer semiconductive layer 140 are simultaneously extruded to the outer circumference of the conductor 110. As a result, an extruded material serving as a cable core is formed.

### (S400: Crosslinking step)

After completion of the extrusion step S300, at least a part of the insulation layer 130 is crosslinked with a crosslinking agent in the crosslinking step S400 according to the present embodiment. The crosslinking step S400 according to the present embodiment is carried out by, for example, the so-called dry crosslinking method.

In the present embodiment, in the polyethylene in the insulation layer 130, a crosslinked polyethylene that is insoluble in xylene at 120°C is formed while a non-crosslinked polyethylene that is soluble in xylene at 120°C remains. The non-crosslinked polyethylene has a content of methine groups of 0.5 or more and 3.0 or less per 100 carbon atoms in the non-crosslinked polyethylene.

In the present embodiment, the crosslinking temperature is varied in, for example, two steps to carry out the crosslinking of the insulation layer 130.

The case of maintaining a constant crosslinking temperature in one step in the crosslinking step without varying the crosslinking temperature is considered below.

In this case, when the crosslinking temperature is set to an appropriate temperature in one step, crosslinking proceeds normally. Radicals are produced at methine groups and the like in the polyethylene by means of the crosslinking agent, and molecular chains of other polyethylene bind at the positions where the radicals are produced. Because of this, non-crosslinked polyethylene is unlikely to remain in the insulating layer 130. Further, a large amount of methine groups in the polyethylene is decomposed during the crosslinking step, decreasing the content of methine groups in the residual non-crosslinked polyethylene.

Alternatively, in the case where the crosslinking temperature is set to an extremely low temperature in one step, sufficient radicals are not formed. Because of this, although the amount of residual non-crosslinked polyethylene is high, a sufficient amount of the crosslinked polyethylene is not formed in the insulation layer 130. Further, methine groups in the polyethylene are hardly decomposed during the crosslinking step, increasing the content of methine groups in the residual non-crosslinked polyethylene.

Alternatively, in the case where the crosslinking temperature is set to an extremely high temperature in one step, the crosslinking agent may be volatilized or only the outermost surface of the insulation layer 130 is crosslinked. Because of this, most of the raw material polyethylene is not consumed for the crosslinking, leaving a large amount of non-crosslinked polyethylene. In this case, methine groups in the polyethylene are hardly decomposed during the crosslinking step, increasing the content of methine groups in the residual non-crosslinked polyethylene.

In contrast, in the present embodiment, the crosslinking temperature is varied in two steps, and thus the non-crosslinked polyethylene satisfying the above-mentioned content of methine groups can remain in the insulation layer 130.

Specifically, the crosslinking step S400 according to the present embodiment has, for example, a first crosslinking step S420 and a second crosslinking step S440.

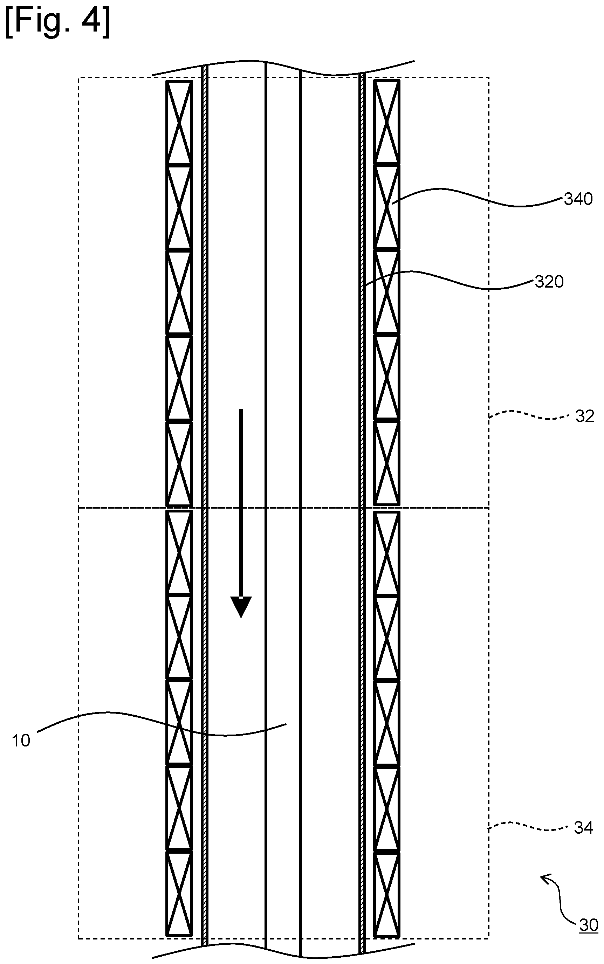

In the first crosslinking step S420 and the second crosslinking step S440, a crosslinking device 30 illustrated in FIG. 4, for example, is used. As illustrated in FIG. 4, the crosslinking device 30 according to the present embodiment has, for example, a crosslinking tube 320 and multiple zone heaters 340.

In the crosslinking tube 320, the extruded material serving as a cable core of the power cable 10, for example, is inserted. The crosslinking tube 320 is pressurized with nitrogen gas or the like.

The zone heaters 340 are provided to surround, for example, the outer circumference of the crosslinking tube 320. The zone heaters 340 are configured as, for example, infrared heaters respectively heating inside of the crosslinking tube 320 by infrared radiation.

The zone heaters 340 may be provided in plurality, for example. The multiple zone heaters 340 are arranged, for example, along the axial direction of the crosslinking tube 320. The multiple zone heaters 340 are, for example, formed so as to be able to adjust the heating temperature individually.

The crosslinking device 30 is, for example, divided into two areas according to the crosslinking temperatures to be achieved by the zone heaters 340. Specifically, the crosslinking device 30 has, for example, a first crosslinking area 32 which is heated to a first crosslinking temperature and a second crosslinking area 34 which is heated to a second crosslinking temperature along the insertion direction of the power cable 10 in this order. In each of the first crosslinking area 32 and the second crosslinking area 34, the duration of crosslinking is adjusted according to the number (namely, the length of the respective areas in the axial direction) of the zone heaters 340.

### (S420: First crosslinking step)

In the first crosslinking step S420, in the first crosslinking area 32 of the crosslinking device 30, some of crosslinked polyethylene is formed in the insulation layer 130 at the first crosslinking temperature. As a result, a certain amount of crosslinked polyethylene required of the insulation layer 130 is secured.

In the first crosslinking step S420, the polyethylene is crosslinked and the crosslinking agent is retained in the polyethylene so that the crosslinking agent is less volatile at the second crosslinking temperature described hereinbelow than the case where the first crosslinking step S420 is not carried out. In other words, the molecules of the portion of the polyethylene where crosslinked can be configured to be less mobile to prevent volatilization of the crosslinking agent due to heat.

As described above, when the crosslinking temperature is increased directly, the crosslinking agent may be volatilized more easily. Because of this, it could be difficult to form a sufficient amount of the crosslinked polyethylene.

Meanwhile, in the present embodiment, the first crosslinking temperature in the first crosslinking step S420 is set to be lower than the second crosslinking temperature described hereinbelow and the crosslinking agent is retained in the polyethylene. Thus, even when the crosslinking temperature is increased to the second crosslinking temperature in the second crosslinking step S440 described hereinbelow, the crosslinking agent can be prevented from volatilizing in the second crosslinking step S440. As a result, a certain amount of the crosslinked polyethylene can be formed in the second crosslinking step S440 described hereinbelow.

Here, specifically, the first crosslinking temperature is, for example, 180°C or higher and 275°C or lower. When the first crosslinking temperature is 180°C or higher, a certain amount of the crosslinked polyethylene can be secured as well as the crosslinking agent can be retained in the polyethylene. Meanwhile, when the first crosslinking temperature is 275°C or lower, excessive volatilization of the crosslinking agent in the first crosslinking step S420 can be prevented.

The crosslinking duration in the first crosslinking step S420 is, for example, 1 minute or more and less than 30 minutes. When the crosslinking duration in the first crosslinking step S420 is 1 minute or more, a certain amount of the crosslinked polyethylene can be secured as well as the crosslinking agent can be retained in the polyethylene. Meanwhile, when the crosslinking duration in the first crosslinking step S420 is less than 30 minutes, excessive crosslinking of the polyethylene in the first crosslinking step S420 can be prevented.

### (S440: Second crosslinking step)

In the second crosslinking step S440, in the second crosslinking area 34 of the crosslinking device 30, further crosslinked polyethylene is formed in the insulation layer 130 at the second crosslinking temperature that is higher than the first crosslinking temperature. Meanwhile, hydrogen is allowed to recombine with at least some of the polyethylene from where hydrogen was eliminated, thereby leaving residual non-crosslinked polyethylene in the insulation layer 130.

In other words, it is possible to make it more difficult for the part of the polyethylene where hydrogen is eliminated to combine with further molecular chains of the crosslinked polyethylene or non-crosslinked polyethylene. That is to say, excessive formation of crosslinking points can be prevented to prevent excessive progress of crosslinking of the polyethylene.

As described above, in the second crosslinking step S440, both formation of the crosslinked polyethylene and provision of residual non-crosslinked polyethylene can be stably achieved.

Here, specifically, the second crosslinking temperature is, for example, 280°C or higher and 400°C or lower. When the second crosslinking temperature is 280°C or higher, both formation of the crosslinked polyethylene and provision of residual non-crosslinked polyethylene can be stably achieved. Meanwhile, when the second crosslinking temperature is 400°C or lower, excessive volatilization of the crosslinking agent in the second crosslinking step S440 can be prevented.

The crosslinking duration in the second crosslinking step S420 is, for example, 1 minute or more and less than 50 minutes. When the crosslinking duration in the second crosslinking step S440 is 1 minute or more, both formation of the crosslinked polyethylene and provision of residual non-crosslinked polyethylene can be stably achieved. Meanwhile, when the crosslinking duration in the second crosslinking step S440 is less than 50 minutes, excessive crosslinking of the polyethylene in the second crosslinking step S440 can be prevented.

Because of the first crosslinking step S420 and the second crosslinking step S440 as described above, the non-crosslinked polyethylene satisfying the content of methine groups of 0.5 or more and 3.0 or less per 100 carbon atoms in the non-crosslinked polyethylene as described above, can remain in the insulation layer 130.

Thereafter, the cable core passed through the crosslinking device 30 is cooled with water.

Consequently, the cable core including the conductor 110, the inner semiconductive layer 120, the insulation layer 130 and the outer semiconductive layer 140 is formed.

### (S500: Shielding layer formation step)

After completion of the crosslinking step S400, the shielding layer 150 is formed by, for example, winding a copper tape outside of the outer semiconductive layer 140.

### (S600: Sheath formation step)

After the shielding layer 150 is formed, vinyl chloride is placed in the extruder and extruded to form the sheath 160 on the outer circumference of the shielding layer 150.

Accordingly, the power cable 10 is produced as a solid insulation power cable.

### (7) Summary of the present embodiment

The present embodiment exhibits one or more effects indicated below.

In the present embodiment, the non-crosslinked polyethylene which remains in the insulation layer 130 has a content of methine groups of 0.5 or more and 3.0 or less per 100 carbon atoms in the non-crosslinked polyethylene.

In the present embodiment, the non-crosslinked polyethylene has a content of methine groups of 0.5 or more per 100 C, and thus excessive formation of the crosslinked polyethylene can be prevented while allowing a certain amount of residual methine groups that may serve as origins of heat deterioration to remain in the residual non-crosslinked polyethylene in the insulation layer 130. Because of this, the methine groups in the non-crosslinked polyethylene can be targeted for deterioration, namely can serve as sacrificial points for heat aging. By using the methine groups in the non-crosslinked polyethylene as targets for deterioration, deterioration attacks on the crosslinked polyethylene may be prevented. As a result, heat aging of the insulation layer can be prevented.

Meanwhile, in the present embodiment, the non-crosslinked polyethylene has a content of methine groups of 3.0 or less per 100 C, and thus a sufficient amount of the crosslinked polyethylene can be formed, while preventing excessive residual methine groups that may serve as origins of heat deterioration in the non-crosslinked polyethylene. Because of this, excessive heat deterioration of the non-crosslinked polyethylene originating from methine groups can be prevented. In addition, further attacks on the crosslinked polyethylene resulting from heat-deteriorated non-crosslinked polyethylene can be prevented. As a result, heat aging throughout the insulation layer 130 can be prevented from progressing.

As described above, the present embodiment can improve heat aging resistance of the insulation layer 130. In other words, even the power cable 10 which generated heat due to passage of current over a long period of time can maintain various properties (flexibility, insulation properties, etc.) required of the power cable 10.

### (8) Modification example of the present embodiment

The above embodiment may be modified, if needed, as in the modification example indicated below. Elements which are different from the above-described embodiment are hereinafter described, and elements substantially the same as the elements described for the above embodiment are given the same reference signs and detailed descriptions therefor are omitted.

In the modification example, the power cable 10 may be formed, for example, for direct current. In the modification example, the insulation layer 130 may include, for example, an inorganic filler.

### (Inorganic filler)

The inorganic filler traps space charge in the insulation layer 130 and prevents local accumulation of space charge in the insulation layer 130. Because of this, the insulation layer 130 can have improved insulation properties.

The inorganic filler includes at least any of zinc oxide, titanium oxide, magnesium oxide, silicon dioxide, carbon black, carbon nanotubes and graphene.

In the present embodiment, at least some of the inorganic filler may be surface-treated with a silane coupling agent.

### (Modified polymer)

In the present embodiment, the insulation layer 130 may contain, for example, a modified polymer as the base resin. The modified polymer according to the present embodiment is, for example, a resin containing an olefin unit and modified with at least one compound selected from unsaturated organic acids and derivatives thereof. The modified polymer may be, for example, an unsaturated carboxylic acid-modified polyethylene. Among others, the modified polymer may be modified by, for example, maleic anhydride. By including such a modified polymer, compatibility (adhesion) between the polar inorganic filler and the base resin can be improved and dispersibility of the inorganic filler can be improved.

In the present embodiment, the modified polymer may be, for example, an unsaturated carboxylic acid-modified polyethylene. Examples of the unsaturated carboxylic acid and derivatives thereof include acrylic acid, methacrylic acid, crotonic acid, maleic acid, cinnamic acid, itaconic acid, citraconic acid and fumaric acid and anhydrides thereof. Among others, the modified polymer may be modified with, for example, maleic anhydride.

### <Other Embodiments of the Present Disclosure>

Embodiments of the present disclosure have been specifically described hereinabove.

In the above embodiments, three layers are simultaneously extruded in the extrusion step S300. However, one layer may be extruded at a time.

### [Examples]

Examples according to the present disclosure are described hereinafter. These examples are illustrations of the present disclosure and the present disclosure is not limited by these examples.

### (1) Preparation of power cable

Power cables of samples A1 to A9 and B1 to B5 were produced as described below.

### <Samples A1 to A9>

For samples A1 to A9, resin compositions containing the following materials were mixed by a Banbury mixer and granulated into pellets by an extruder.

### (Base resin)

Low-density polyethylene (LDPE): 100 parts by mass
Density: 0.92 g/cm³
Melting point: 105°C
Content of methylene groups: 96.5 groups/100 C
Content of methine groups: 1.5 groups/100 C

### (Crosslinking agent)

Dicumyl peroxide: 1.5 parts by mass

### (Antioxidant)

Any of the following materials was added at 0.15 parts by mass as the antioxidant.

### (Antioxidant A)

1,3,5-Tris[[4-(1,1-dimethylethyl)-3-hydroxy-2,6-dimethylphenyl]methyl]-1,3,5-triazine-2,4,6(1H,3H,5H)-trione
Molecular weight: 699
Melting point: 160°C

### (Antioxidant B)

4,4'-Thiobis(6-tert-butyl-m-cresol)
Molecular weight: 359
Melting point: 160°C

### (Antioxidant C)

1,2,3,4-Butanetetracarboxylic acid, tetrakis(1,2,2,6,6-pentamethylpiperizin-4-yl)
Molecular weight: 847
Melting point: 65°C

### (Antioxidant D)

Pentaerythritol tetrakis[3-(3,5-di-tert-butyl-4-hydroxyphenyl)propionate]
Molecular weight: 1178
Melting point: 125°C

### (Antioxidant E)

Dibutyl hydroxytoluene
Molecular weight: 220
Melting point: 70°C

A conductor having a cross-sectional area of 600 mm² formed by twisting conductor cores made of dilute copper alloy each having a diameter of 5 mm was then prepared. After the conductor was prepared, an inner semiconductive layer resin composition comprising an ethylene-ethyl acrylate copolymer, the above-described resin composition for the insulation layer and an outer semiconductive layer resin composition comprising the same material as the inner semiconductive layer resin composition were respectively charged into extruders A to C. The temperature of the extruder B was set to the temperature 20°C higher than the melting point of the LDPE as the base resin.

The extrusion products from the extruders A to C were respectively guided to a common head and from the inside towards the outside, an inner semiconductive layer, an insulation layer and an outer semiconductive layer were simultaneously extruded to the outer circumference of the conductor. The inner semiconductive layer, the insulation layer and the outer semiconductive layer respectively had a thickness of 0.5 mm, 9 mm and 0.5 mm.

The above-described crosslinking device was then used and the crosslinking temperature was varied in two steps to perform crosslinking of the insulation layer. Tables 1 and 2 below indicate the conditions in the first crosslinking step and the second crosslinking step for the respective samples. After the crosslinking step, the power cables were cooled with water at 25°C.

The power cables of samples A1 to A9 were produced as described above.

### <Samples B1 to B5>

Samples B1 to B5 were prepared in the same manner as samples A1 to A9 except that the crosslinking step as the novel manufacturing method was not applied. In other words, for samples B1 to B5, a constant crosslinking temperature was maintained in one step without changing the crosslinking temperature. Table 3 below indicates the conditions of the crosslinking step for the samples.

### (2) Evaluations

### (Sheet collection)

The insulation layers of the power cables were thinly sliced to collect multiple sheets of the insulation layers. Each sheet had a thickness of 1 mm. The sheet was collected from the center in the thickness direction of the insulation layer.

### (Contents of functional groups in non-crosslinked polyethylene)

The sheets collected from the insulation layers were soaked in xylene and this xylene was heated at 120°C for 24 hours. The xylene solution containing the non-crosslinked polyethylene dissolved therein was filtered with filter paper heated to 120°C. The filtered xylene solution was volatilized at 120°C to obtain powder of non-crosslinked polyethylene.

After separation of the non-crosslinked polyethylene, the powder of non-crosslinked polyethylene was dissolved in ortho-chlorobenzene. The ¹³C-NMR analysis was carried out under the temperature environment of 130°C using an NMR apparatus available from JEOL Ltd. From the resulting ¹³C-NMR spectrum of the non-crosslinked polyethylene, the integral intensity of methylene groups, the integral intensity of methine groups and the like were determined. The "integral intensity of methylene groups" as used herein is the sum of the integral intensity of multiple peaks that are due to methylene groups and generated in accordance with the positions of the methylene groups in the non-crosslinked polyethylene. The "integral intensity of methine groups" is the sum of the integral intensity of multiple peaks that are due to methine groups and generated in accordance with the positions of the methine groups in the non-crosslinked polyethylene. Consequently, the content of methylene groups and the content of methine groups in the non-crosslinked polyethylene per 100 carbon atoms in the non-crosslinked polyethylene were determined on the basis of the ratios of the integral intensities of methylene groups and methine groups, respectively, relative to the sum of the integral intensity of methine, methylene and methyl groups in the non-crosslinked polyethylene.

### (Heat aging test 1)

The sheets collected from the insulation layers were placed in a prescribed thermostatic chamber and heated at 120°C for 7 days.

### (Elongation after heat aging test 1)

After the heat aging test 1, the sheets were subjected to measurement of tensile elongation at break according to JIS C3005:2014 under test conditions of a temperature of 25°C, tensile rate of 200 mm/min and distance between gauge lines of 25 mm. As a result, sheets with the tensile elongation at break after the heat aging test 1 of 300% or more were evaluated as "good" and sheets with the tensile elongation at break after the heat aging test 1 of less than 300% were evaluated as "poor".

### (Heat aging test 2)

The sheets collected from the insulation layers were placed in a prescribed thermostatic chamber and heated at 180°C for 21 days.

### (Elongation after heat aging test 2)

After the heat aging test 2, the sheets were subjected to measurement of tensile elongation at break according to JIS C3005:2014 under test conditions of a temperature of 25°C, tensile rate of 200 mm/min and distance between gauge lines of 25 mm. As a result, sheets with the tensile elongation at break after the heat aging test 2 of 50% or more were evaluated as "good" and sheets with the tensile elongation at break after the heat aging test 2 of less than 50% were evaluated as "poor".

### (Volume resistivity after heat aging test 2)

After the heat aging test 2, the sheets were subjected to measurement of volume resistivity under conditions of a temperature of 90°C and direct electric field of 10 kV/mm. As a result, sheets with the volume resistivity after the heat aging test 2 of 1.0×10¹² Ω·cm or more were evaluated as "good" and sheets with the volume resistivity after the heat aging test 2 of less than 1.0×10¹² Ω·cm were evaluated as "poor".

### (Gel fraction)

The collected sheets were subjected to measurement of gel fractions according to the following procedures. First, the mass of the sheets before soaking in xylene was measured. The entire sheets were then soaked in xylene and xylene in this state was heated at 120°C for 1 day. The remaining sheets were removed from xylene and only the insoluble parts of the sheets were dried in the atmosphere at 120°C for 1 day. The mass of the insoluble parts of the sheets remaining after soaking in xylene was then measured. As a result, the ratio of the mass of the insoluble part of the sheet remaining after soaking in xylene relative to the mass of the sheet before soaking in xylene was determined as the "gel fraction".

### (3) Results

The results of the evaluations of the samples are explained by referring to Tables 1 to 3 below. In each table, "aE+b" means a×10^{b}.

**[Table 1]**

| | | | A1 | A2 | A3 | A4 | A5 |
|---|---|---|---|---|---|---|---|
| Base resin | LDPE | parts by mass | 100 | 100 | 100 | 100 | 100 |
| Antioxidant | Material | | A | B | B | A | A |
| | Molecular weight | | 699 | 359 | 359 | 699 | 699 |
| | Content | parts by mass | 0.15 | 0.15 | 0.15 | 0.15 | 0.15 |
| First crosslinking step | First crosslinking temperature | °C | 250 | 250 | 250 | 250 | 200 |
| | Duration | min. | 10 | 20 | 20 | 5 | 20 |
| Second crosslinking step | Second crosslinking temperature | °C | 300 | 300 | 300 | 330 | 300 |
| | Duration | min. | 10 | 10 | 20 | 20 | 20 |
| Non-crosslinked PE | CH2 group conte nt | groups/100 C | 97.5 | 95.5 | 96.8 | 93.9 | 98.4 |
| | CH1 group content | groups/100 C | 1.3 | 1.8 | 1.5 | 2.9 | 0.6 |
| After 120°C, 7d | Tensile elongation at break | % | >500% | >500% | >500% | >500% | >500% |
| After 180°C, 21d | Tensile elongation at break | % | 120% | 80% | 130% | 130% | 130% |
| | Volume resistivity | Ω·cm | 4.00E+13 | 2.80E+13 | 4.40E+13 | 4.40E+13 | 4.40E+13 |
| Gel fraction | | % | 80 | 83 | 78 | 65 | 88 |

**[Table 2]**

| | | | A6 | A7 | A8 | A9 |
|---|---|---|---|---|---|---|
| Base resin | LDPE | parts by mass | 100 | 100 | 100 | 100 |
| Antioxidant | Material | | B | C | D | E |
| | Molecular weight | | 359 | 847 | 1178 | 220 |
| | Content | parts by mass | 0.15 | 0.15 | 0.15 | 0.15 |
| First crosslinking step | First crosslinking temperature | °C | 250 | 250 | 250 | 250 |
| | Duration | min. | 10 | 10 | 10 | 10 |
| Second crosslinking step | Second crosslinking temperature | °C | 300 | 300 | 300 | 300 |
| | Duration | min. | 10 | 10 | 10 | 10 |
| Non-crosslinked PE | CH2 group content | groups/100 C | 96.1 | 96 | 97.3 | 94.8 |
| | CH1 group content | groups/100 C | 1.4 | 1.9 | 0.6 | 2.6 |
| After 120°C, 7d | Tensile elongation at break | % | >500 | >500 | >500 | >500 |
| After 180°C, 21d | Tensile elongation at break | % | 130% | 100% | 50% | 90% |
| | Volume resistivity | Ω·cm | 3.00E+13 | 2.60E+13 | 1.80E+13 | 2.90E+13 |
| Gel fraction | | % | 81 | 82 | 88 | 62 |

**[Table 3]**

| | | | B1 | B2 | B3 | B4 | B5 |
|---|---|---|---|---|---|---|---|
| Base resin | LDPE | parts by mass | 100 | 100 | 100 | 100 | 100 |
| Antioxidant | Material | | D | D | D | D | D |
| | Molecular weight | | 1178 | 1178 | 1178 | 1178 | 1178 |
| | Content | parts by mass | 0.15 | 0.15 | 0.15 | 0.15 | 0.15 |
| Crosslinking step | Crosslinking temperature | °C | 160 | 250 | 200 | 350 | 300 |
| | Duration | min. | 30 | 30 | 50 | 30 | 50 |
| Non-crosslinked PE | CH2 group content | groups/100 C | 93.1 | 98.5 | 98.5 | 93.5 | 93.2 |
| | CH1 group content | groups/100 C | 4.1 | 0.3 | 0.4 | 3.3 | 3.5 |
| After 120°C, 7d | Tensile elongation at break | % | 350% | >500% | >500% | >500% | >500% |
| After 180°C, 21d | Tensile elongation at break | % | Melted | 0% | 0% | Melted | 0% |
| | Volume resistivity | Ω·cm | Melted | <1.0E+12 | <1.0E+12 | Melted | <1.0E+12 |
| Gel fraction | | % | 25 | 80 | 75 | 50 | 92 |

### <Sample B1>

Sample B1 had a low gel fraction and had a content of methine groups in the non-crosslinked polyethylene of above 3.0 per 100 C. Because of this, the sheet of sample B1 melted after the heat aging test 2.

Sample B1 had an extremely low crosslinking temperature and thus had a low gel fraction, namely did not have sufficient crosslinked polyethylene formed therein. Further, the residual non-crosslinked polyethylene had excessive residual methine groups that may serve as origins of heat deterioration. Because of this, excessively heat-deteriorated non-crosslinked polyethylene attacked crosslinked polyethylene. It is believed that as a result, the sheet melted in the heat aging test 2 which was under harsher conditions than the conventional heat aging test 1.

### <Samples B2 and B3>

Samples B2 and B3 respectively had a gel fraction within the defined range (60% or more and 90% or less), but the content of methine groups in the non-crosslinked polyethylene was less than 0.5 per 100 C. Because of this, samples B2 and B3 respectively had a tensile elongation at break after the heat aging test 2 of less than 50% and a volume resistivity after the heat aging test 2 of less than 1×10¹² Ω·cm.

In each of samples B2 and B3, the polyethylene in the insulation layer was crosslinked at an appropriate temperature, and thus the polyethylene forming the insulation layer was sufficiently crosslinked. However, the amount of residual non-crosslinked polyethylene was extremely small. Further, the residual non-crosslinked polyethylene had an extremely small amount of methine groups that may serve as origins of heat deterioration. Because of this, the crosslinked polyethylene rather than the non-crosslinked polyethylene was directly targeted for deterioration. It is believed that as a result, the tensile elongation at break and volume resistivity were low in the heat aging test 2 under harsher conditions than the conventional heat aging test 1.

### <Sample B4>

Sample B4 had a low gel fraction and had a content of methine groups in the non-crosslinked polyethylene of above 3.0 per 100 C. Because of this, the sheet of sample B1 melted after the heat aging test 2.

Sample B4 had an extremely high crosslinking temperature and thus the crosslinking agent volatilized during the crosslinking step. Because of this, polyethylene was not sufficiently crosslinked throughout the insulation layer. Further, the residual non-crosslinked polyethylene had an extremely large amount of residual methine groups that may serve as origins of heat deterioration. Because of this, excessively heat-deteriorated non-crosslinked polyethylene attacked the crosslinked polyethylene. It is believed that as a result, the sheet melted in the heat aging test 2 which was under harsher conditions than the conventional heat aging test 1.

### <Sample B5>

Sample B5 had a gel fraction within the defined range (60% or more and 90% or less), but the content of methine groups in the non-crosslinked polyethylene was above 3.0 per 100 C. Because of this, sample B5 had a tensile elongation at break after heat aging test 2 of less than 50% and a volume resistivity after the heat aging test 2 of less than 1×10¹² Ω·cm.

In sample B5, crosslinking was carried out at a high temperature at which the crosslinking agent did not volatilize, and thus the crosslinking rate was high and the crosslinking frequency was also high. However, despite crosslinking of polyethylene, only non-crosslinked polyethylene molecules bound to each other before movement of the non-crosslinked polyethylene having a low molecular weight. Because of this, an extremely large amount of methine groups that may serve as origins of heat deterioration was formed at crosslinking points of the non-crosslinked polyethylene. Because of the excessive methine groups, excessively heat-deteriorated non-crosslinked polyethylene attacked the crosslinked polyethylene. It was considered that as a result, the tensile elongation at break and volume resistivity were low in the heat aging test 2 under harsher conditions than the conventional heat aging test 1.

### <Samples A1 to A9>

In contrast, samples A1 to A9 respectively had a gel fraction within the defined range (60% or more and 90% or less) and the content of methine groups in the non-crosslinked polyethylene of 0.5 or more and 3.0 or less per 100 C. Because of this, sample A1 to A9 respectively had a tensile elongation at break after the heat aging test 2 of 50% or more and a volume resistivity after the heat aging test 2 of 1×10¹² Ω·cm or more.

For samples A1 to A9, the crosslinking temperature was varied in two steps. Because of this, non-crosslinked polyethylene satisfying the content of methine groups described above, could remain in the insulation layer.

For samples A1 to A9, the non-crosslinked polyethylene had a content of methine groups of 0.5 or more per 100 C, and thus the methine groups in the non-crosslinked polyethylene could be targeted for deterioration. Meanwhile, for samples A1 to A9, the non-crosslinked polyethylene had a content of methine groups of 3.0 or less, and thus further attacks on the crosslinked polyethylene resulting from heat-deteriorated non-crosslinked polyethylene could be prevented. As a result, it was observed that samples A1 to A9 had improved heat aging resistance of the insulation layers.

### <Antioxidant Dependence>

Samples A1 and A6 to A9 produced under the same conditions except for antioxidants are compared.

Samples A1, A6 and A7 in which the antioxidants had a molecular weight of 300 or more and 1100 or less respectively had a gel fraction within the range of 60% or more and 90% or less which was higher than that of sample A9 in which the antioxidant had a molecular weight of 300.

Samples A1, A6 and A7 in which the antioxidants had a molecular weight of 300 or more and 1100 or less respectively had a tensile elongation at break after the heat aging test 2 within the range of 50% or more, which was higher than that of sample A8 in which the antioxidant had a molecular weight of above 1100. Further, samples A1, A6 and A7 had a volume resistivity after the heat aging test 2 within the range of 1×10¹² Ω·cm or more, which was higher than that of sample A8.

There was no difference in evaluation results between samples A1 and A6 in which a phenolic antioxidant was used and sample A7 in which an amine antioxidant was used.

For samples A1, A6 and A7, the molecular weight of the antioxidants was 300 or more and thus deactivation of radicals produced in the crosslinking agent or radicals in the main chains of polyethylene produced due to the radicals produced in the crosslinking agent could be prevented. As a result, it was observed that a desired degree of crosslinking (gel fraction) was stably obtained for samples A1, A6 and A7.

For samples A1, A6 and A7 in which the antioxidants had a molecular weight of 1100 or less respectively, the antioxidants could appropriately work on the non-crosslinked polyethylene satisfying the content of methine groups described above. Because of this, deterioration due to oxidation of the crosslinked polyethylene could be stably prevented. As a result, it was observed that samples A1, A6 and A7 showed more preferable heat aging resistance of the insulation layers.

### [Reference Signs List]

- 10: Power cable
- 30: Crosslinking device
- 32: First crosslinking area
- 34: Second crosslinking area
- 100: Power cable
- 110: Conductor
- 120: Inner semiconductive layer
- 130: Insulation layer
- 140: Outer semiconductive layer
- 150: Shielding layer
- 160: Sheath
- 320: Crosslinking tube
- 340: Zone heater

## Claims

1. A power cable comprising:
a conductor; and
an insulation layer covering an outer circumference of the conductor and constituted from a resin composition comprising a polyethylene, wherein
the insulation layer contains, in the polyethylene, a crosslinked polyethylene that is insoluble in xylene at 120°C and a non-crosslinked polyethylene that is soluble in xylene at 120°C, and
the non-crosslinked polyethylene has a content of methine groups of 0.5 or more and 3.0 or less per 100 carbon atoms in the non-crosslinked polyethylene,
where the content of methine groups is measured by ¹³C nuclear magnetic resonance.

2. The power cable according to claim 1, wherein the insulation layer has a gel fraction of 60% or more and 90% or less,
where the gel fraction is determined by soaking a sheet collected from the insulation layer in xylene, heating xylene in this state at 120°C for 1 day and measuring a ratio of the mass of the insoluble part of the sheet remaining after soaking in xylene to the mass of the sheet before soaking in xylene.

3. The power cable according to claim 1 or 2, wherein
the non-crosslinked polyethylene has a content of methylene groups of 94 or more and 98 or less per 100 carbon atoms in the non-crosslinked polyethylene,
where the content of methylene groups is measured by ¹³C nuclear magnetic resonance.

4. The power cable according to any one of claims 1 to 3, wherein the insulation layer contains an antioxidant having a molecular weight of 300 or more and 1100 or less.

5. The power cable according to any one of claims 1 to 4, wherein a sheet collected from the insulation layer has a tensile elongation at break of 50% or more as measured according to JIS C3005:2014 at 25°C after the sheet is heated at 180°C for 21 days.

6. The power cable according to any one of claims 1 to 5, wherein a sheet collected from the insulation layer has a volume resistivity of 1×10¹² Ω·cm or more as measured under conditions of a temperature of 90°C and a direct electric field of 10 kV/mm after the sheet is heated at 180°C for 21 days.

## Patentansprüche

1. Stromkabel, welches umfasst:
einen Leiter und
eine Isolierschicht, die einen Außenumfang des Leiters bedeckt und aus einer Harzzusammensetzung, die ein Polyethylen umfasst, besteht, wobei
die Isolierschicht in dem Polyethylen ein vernetztes Polyethylen, das bei 120 °C in Xylol unlöslich ist, und ein unvernetztes Polyethylen, das bei 120 °C in Xylol löslich ist, enthält, und
das unvernetzte Polyethylen einen Gehalt an Methingruppen von 0,5 oder mehr und 3,0 oder weniger pro 100 Kohlenstoffatome im unvernetzten Polyethylen aufweist,
wobei der Gehalt an Methingruppen mittels ¹³C-Kernspinresonanz gemessen wird.

2. Stromkabel gemäß Anspruch 1, wobei die Isolierschicht einen Gelanteil von 60 % oder mehr und 90 % oder weniger aufweist,
wobei der Gelanteil bestimmt wird, indem eine aus der Isolierschicht entnommene Folie in Xylol eingeweicht wird, das Xylol in diesem Zustand 1 Tag lang auf 120 °C erhitzt wird und ein Verhältnis der Masse des nach dem Einweichen in Xylol verbleibenden unlöslichen Teils der Folie zur Masse der Folie vor dem Einweichen in Xylol gemessen wird.

3. Stromkabel gemäß Anspruch 1 oder 2, wobei
das nicht vernetzte Polyethylen einen Gehalt an Methylengruppen von 94 oder mehr und 98 oder weniger pro 100 Kohlenstoffatome im nicht vernetzten Polyethylen aufweist,
wobei der Gehalt an Methylengruppen mittels ¹³C-Kernspinresonanz gemessen wird.

4. Stromkabel gemäß einem der Ansprüche 1 bis 3, wobei die Isolierschicht ein Antioxidans mit einem Molekulargewicht von 300 oder mehr und 1100 oder weniger enthält.

5. Stromkabel gemäß einem der Ansprüche 1 bis 4, wobei eine aus der Isolierschicht entnommene Folie eine Bruchdehnung von 50 % oder mehr aufweist, gemessen gemäß JIS C3005:2014 bei 25 °C, nachdem die Folie 21 Tage lang auf 180 °C erhitzt wurde.

6. Stromkabel gemäß einem der Ansprüche 1 bis 5, wobei eine aus der Isolierschicht entnommene Folie einen spezifischen Durchgangswiderstand von 1×10¹² Ω·cm oder mehr aufweist, gemessen unter Bedingungen einer Temperatur von 90 °C und eines elektrischen Gleichfeldes von 10 kV/mm, nachdem die Folie 21 Tage lang auf 180 °C erhitzt wurde.

## Revendications

1. Câble d'alimentation comprenant:
un conducteur; et
une couche isolante recouvrant la circonférence extérieure du conducteur et constituée d'une composition de résine comprenant du polyéthylène,
dans lequel
la couche isolante contient, dans le polyéthylène, un polyéthylène réticulé insoluble dans le xylène à 120°C et un polyéthylène non réticulé soluble dans le xylène à 120°C, et
le polyéthylène non réticulé présente une teneur en groupes méthine comprise entre 0,5 et 3,0 par 100 atomes de carbone dans le polyéthylène non réticulé,
la teneur en groupes méthine étant mesurée par résonance magnétique nucléaire au carbone¹³.

2. Câble d'alimentation selon la revendication 1, dans lequel la couche isolante présente une fraction de gel comprise entre 60 % et 90 %,
la fraction de gel étant déterminée en trempant une feuille prélevée sur la couche isolante dans du xylène, en chauffant le xylène dans cet état à 120°C pendant 1 jour et en mesurant le rapport entre la masse de la partie insoluble de la feuille restant après trempage dans le xylène et la masse de la feuille avant trempage dans le xylène.

3. Câble d'alimentation selon les revendications 1 ou 2, dans lequel
le polyéthylène non réticulé présente une teneur en groupes méthylène comprise entre 94 et 98 par 100 atomes de carbone dans le polyéthylène non réticulé.
la teneur en groupes méthylène étant mesurée par résonance magnétique nucléaire au carbone¹³ .

4. Câble d'alimentation selon l'une quelconque des revendications 1 à 3, dans lequel la couche isolante contient un antioxydant ayant un poids moléculaire compris entre 300 et 1100.

5. Câble d'alimentation selon l'une quelconque des revendications 1 à 4, dans lequel une feuille prélevée de la couche isolante présente un allongement à la rupture de 50% ou plus, mesuré conformément à la norme JIS C3005:2014 à 25°C après que la feuille a été chauffée à 180°C pendant 21 jours.

6. Câble d'alimentation selon l'une quelconque des revendications 1 à 5, dans lequel une feuille prélevée de la couche isolante présente une résistivité volumique de 1 ×10¹² Ω·cm ou plus, mesurée dans des conditions de température de 90°C et de champ électrique continu de 10 kV/mm après que la feuille a été chauffée à 180°C pendant 21 jours.
